# EUROPEAN PATENT SPECIFICATION

(11) **EP 0 834 120 B1**
(45) Date of publication and mention of the grant of the patent: **02.05.2002**
(21) Application number: 96903139.2
(22) Date of filing: 21.02.1996
(51) Int. Cl.: G06F 9/44

(54) **A METHOD AND APPARATUS FOR ENABLING ACCESS TO A PLURALITY OF COMPUTER SUPPORTED OPERATIONS**
VERFAHREN UND VORRICHTUNG FÜR DIE ERMÖGLICHUNG EINES ZUGRIFFS AUF MEHRERE COMPUTERGESTÜTZTE OPERATIONEN
PROCEDE ET DISPOSITIF POUR AUTORISER L'ACCES A UNE PLURALITE D'OPERATIONS ASSISTEES PAR ORDINATEUR

(30) Priority: 21.02.1995 EP 95301107
(43) Date of publication of application: 08.04.1998
(73) Proprietor: BRITISH TELECOMMUNICATIONS public limited company, London EC1A 7AJ (GB)
(72) Inventor: HUGHES, Derek, Gareth, Cardiff CF4 8QJ (GB); JENKIN, Geraint, Howell, Mid-Glam CF35 6RF (GB); BISHOP, Daren, James, Cardiff CF2 3PZ (GB); BRYANT, Jeffry, Alan, Cardiff CF64 5TG (GB); HOLVEY, John, Gwent NP3 5TJ (GB)
(74) Representative: Dutton, Erica L. G.
(86) International application number: GB9600412
(87) International publication number: WO9626485

(56) References cited:
- EP-A- 0 598 534
- EP-A- 0 622 729
- WO-A-94/06074
- BRITISH TELECOMMUNICATIONS ENGINEERING, vol. 9, August 1990, LONDON GB, pages 133-136, XP000160990 GARDNER ET AL: "Expert System for Customer Facing Environments (ESCFE): Improving the Customer Interface"

## Description

This invention relates to a method and apparatus for providing access to a number of computer supported operations.

Customers of large organisations, such as telecommunication service providers, favour the provision of one point of contact with the company. The customer's perception of such organisations tends to be formed by the efficiency with which the contact is handled.

Unfortunately, given the variety in the type of enquiry or request a customer can make when an organisation offers a wide range of services or products, it is often necessary to pass the customer on to another part of the organisation. This can happen a number of times until the customer has reached the appropriate part of the organisation to deal with the enquiry. Understandably, the customer finds such treatment frustrating leading to the level of service being perceived as inadequate.

Common queries or requests that may be made of telecommunications service providers may include an enquiry about a telephone bill or the placing of an order for a new item of equipment or a new service. Normally, to do this the customer contacts an employee of the service provider by telephone. The employee then accesses a number of computer systems to answer the enquiry or to place the order.

In practice, because organisations and their services develop with time, there is usually provided a number of computer systems. For example there may be a computer system for billing, one for ordering equipment and another for requesting fault rectification.

Thus, for large organisations offering an extensive range of services it will be seen that provision of a single point of contact is difficult to achieve. Personnel manning single points of contact have to be able to use more than one computer system with a level of proficiency that will satisfy a customer's perceptions of efficiency.

WO94/06074 discloses a computer system comprising a graphical procedural user interface that provides a user with instructions for carrying out a job that is defined a s series of tasks. The job is represented by a series of icons, each icon representing a task. Procedural services are attached to each icon so that activation of the icon by the user results in the task being carried out automatically. EP-A-0622729 discloses a computer system which provides a centrally stored set of user interfaces that can be accessed by remote applications.

Updating the computer system will obviously be difficult because of the need to ensure each employee manning a customer point of contact is made aware of the changes. Adding a new system to support a new service or aspect of the organisation will require provision of more equipment for the employee which is obviously expensive and requires provision of more work-space. Clearly, there is a limit to how many systems can be provided at the desk of an employee.

A further problem with present arrangements is that one enquiry may require the use of more than one computer system. For example, a customer requiring a telephone may in fact be a new subscriber at a new building. This may require the use of a system to order a telephone, the use of a billing system to allocate the customer an account and the use of another system to instruct engineers to install a telephone line to the customer's premises. Thus, what a customer perceives as a single task requires the use of more than one computer system. That is to say a single task can spawn a number of operations, each operation being supported by a separate computer system.

It is difficult to ensure that employees are trained to use all the operations that are required in order to successfully deal with a task. This is even more so where a new operation is required to be prepared to complete a task which is already familiar.

According to the invention there is provided an apparatus for enabling access by any one of a plurality of users to a plurality of mainframe computer systems, each mainframe computer system supporting operations to complete a task utilising at least some of the operations, the apparatus comprising a set of user terminals connected by at least one server to said plurality of mainframe computer systems, wherein the at least one server comprises interface programs to enable interaction to occur between each of the mainframe computer systems and the set of user terminals, and a plurality of help files each of which comprises a set of instructions for performing a task, each help file having an associated index file which contains descriptors of operations required to perform the respective task, and wherein the user terminals each comprise storage capacity for temporary storage of at least one interface program and at least one help file with its associated index file, the system responding to a task selection by a user at a user terminal by downloading at least one interface program, and at least one help file with its associated index file, to the user terminal, thereby enabling communication between the user terminal and at least one of the mainframe computer systems to complete the selected task.

Conveniently the apparatus is operable in response to a user selecting a second task, to compare the second task to a first task and:
(i) if the tasks are the same using, for the second task, the files that were downloaded for the first task; or
(ii) if tasks are not the same then discarding said files and downloading the files corresponding to the second task.

According to another aspect of the invention there is provided a method for enabling access by any one of a plurality of users to a plurality of mainframe computer systems, each mainframe computer system supporting operations to complete a task utilising at least some of the operations, said plurality of mainframe computer systems being connected by at least one server to a set of user terminals, the at least one server comprising interface programs to enable interaction to occur between each of the mainframe computer systems and the set of user terminals, the method comprising the steps of:
providing a plurality of help files each of which comprises a set of instructions for performing a task, each help file being associated with an index file containing descriptors of operations required to perform the respective task,
in response to a task selection by a user at a user terminal, downloading at least one interface program and at least one help file with its associated index file to the user terminal, thereby enabling communication between the user terminal and at least one of the mainframe computer systems to complete the selected task.

According to a further aspect of the invention there is provided apparatus for enabling access by any one of a plurality of user's computers to a plurality of computer systems, each computer system supporting operations to complete a task utilising at least some of the operations, the apparatus comprising:
a plurality of interface programs to enable interaction to occur between each of the computer systems and the user's computer;
a plurality of help files each comprising a set of instructions for performing a respective task; and
a plurality of index files each associated with one of said help files and containing descriptors of operations required to perform the respective task,
the apparatus being operable in response to the selection of a task at a user's computer to download at least one interface program and at least one help file with its associated index file to the user's computer to enable communication between the user's computer and at least one of the computer systems to complete the selected task.

By providing a description of a task and generating from it a file containing data indicative of the operations required to perform the task it is possible to upgrade the system by adding or changing tasks by simply amending these files.

Embodiments of the present invention enable users to progress tasks against defined workstring definitions while the software manages any necessary component access. A component may be a mainframe or personal computer system, including for example standard word processing office applications.

A system administration feature can allow a view to be fully data driven, enabling business users to define and build their own workstring definitions independently.

A workstring may consist of a number of tasks and questions. A task will access a component system to an appropriate point (for example, transaction level), and the user is asked to select one of several options to determine the next set of tasks to be performed.

If a user is interrupted while working on a particular workstring, or comes to a natural break, there is an opportunity to "park" the operation. The user can then either resume processing the workstring later, or transfer ownership of it to another user to progress the business process.

A specific embodiment of the invention will now be described, by way of example only, with reference to the drawings in which:-
Figure 1 shows a system for providing access to a number of computer supported operations in accordance with the invention;
Figure 2 is an illustrative block diagram of a computer used in the system shown in figure 1;
Figure 3 shows in block diagram form contents of a memory of part of the system shown in figure 1;
Figures 4 to 7 are explanatory diagrams of the system operation.

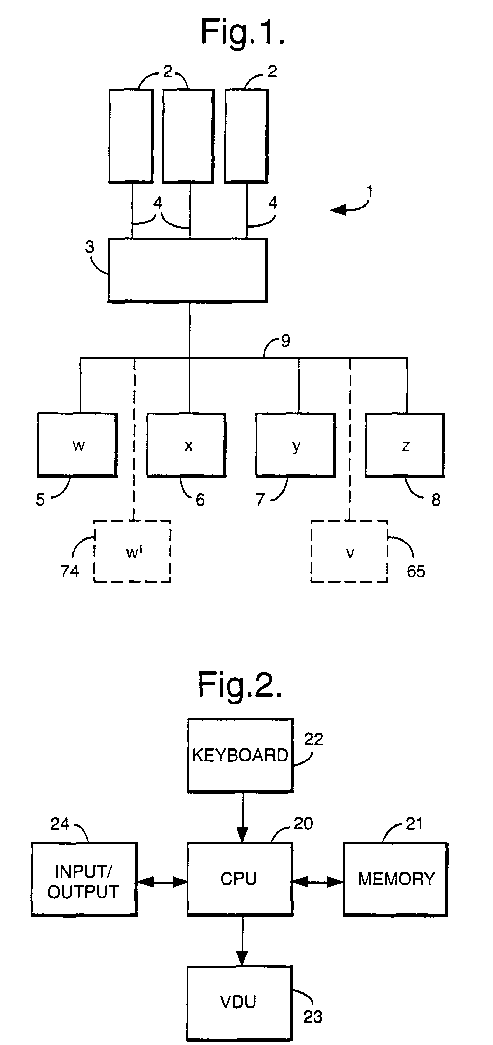

With reference to figure 1, a system 1 operating in accordance with the invention comprises a number of IBM compatible microcomputers 2 (three of which are shown) connected to a local area network (LAN) server 3 by means of a co-axial cable 4. The LAN server 3 connects the micro-computers 2 to four IBM mainframe computer based systems 5, 6, 7 and 8 by means of further co-axial cable 9.

Communication between these components of the system is achieved by means of a software package called "ATTACHMATE" available from a company of the same name which is a program designed for network connection and emulation to IBM mainframe computers. This program is well known to those skilled in the art and will not be described further.

As is shown in the general overview in figure 2, each microcomputer 2 is of a familiar form, comprising a central processing unit (CPU)20, a memory unit 21, an input device comprising a keyboard 22 and an output device comprising a visual display unit (VDU) 23. An input/output device 24 connects the microcomputer 2 to the co-axial cable 4.

The memory unit 21 comprises Random Access Memory (RAM) and Read Only Memory (ROM). This memory can be provided as disk drives or solid state semiconductor memory or a combination of these. (In a UNIX based system this memory could also be distributed over a number of micro-computers in the system although it is convenient for descriptive purposes to consider it as being associated with one).

The Keyboard 22 and VDU 23 enable a user to interact with the system 1.

As will be readily appreciated by those skilled in the art, the memory 21 comprises a number of memory locations. The memory locations will hold data or program instructions in the form of binary or hexadecimal numbers. The program instructions are accessed in a well known manner to govern the operation of the CPU 20.

The IBM mainframe computers 5, 6, 7 and 8 are essentially of the same format as the microcomputer. The main differences are that the memory is very much larger, that is to say, the capacity for storage of information is greater. The input/output devices of the mainframe computers are connected to the LAN server 3 by the co-axial cable 9. Each of the mainframe computers support a particular operational procedure of the organisation. The procedures available are W, X, Y and Z.

The LAN server 3 is also a computer substantially the same as earlier described having a CPU, input/output devices and a memory.

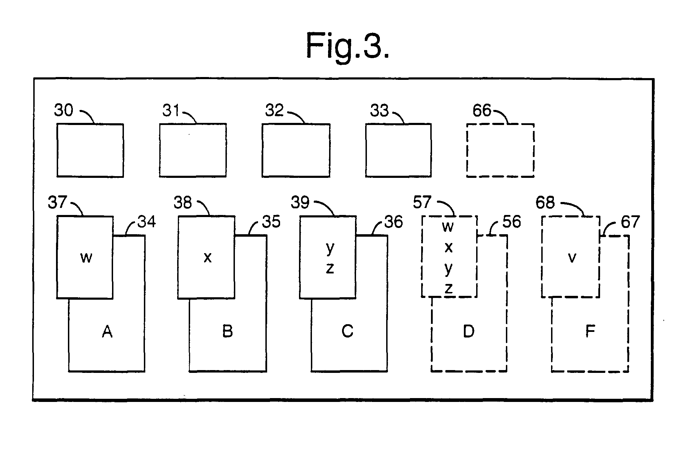

The software stored in the memory of the LAN server 3 is shown in figure 3. The memory stores interface programs 30 to 33, help files 34 to 36 and associated index files 37 to 39.

The interface programs 30 to 33 enable interaction to occur between each of the mainframes 5 to 8 and the micro-computers 2 to enable the operations to be used. These programs are loaded into the microcomputers 2 when required in a manner which will be later described.

Each help file is a plain text set of instructions concerning the task that must be carried out to perform a particular task. The task will involve one or more of the operations W, X, Y or Z. The help files are created prior to system initialisation by a program called "DOC-TO-HELP" marketed by Wex-Tech.

This program also produces an index file associated with each help file. The index file contains a descriptor of the operations required to perform the task. In this embodiment there are three tasks A, B and C. Task A is described in helpfile 34 and from the corresponding index file 37 it can be seen that operation W is used.

Similarly, task B is described in helpfile 35 and from the corresponding index file 38 it can be seen that operation X is used.

Finally, task C is described in helpfile 36 and from the corresponding index file 39 it can be seen that operations Y and Z are used.

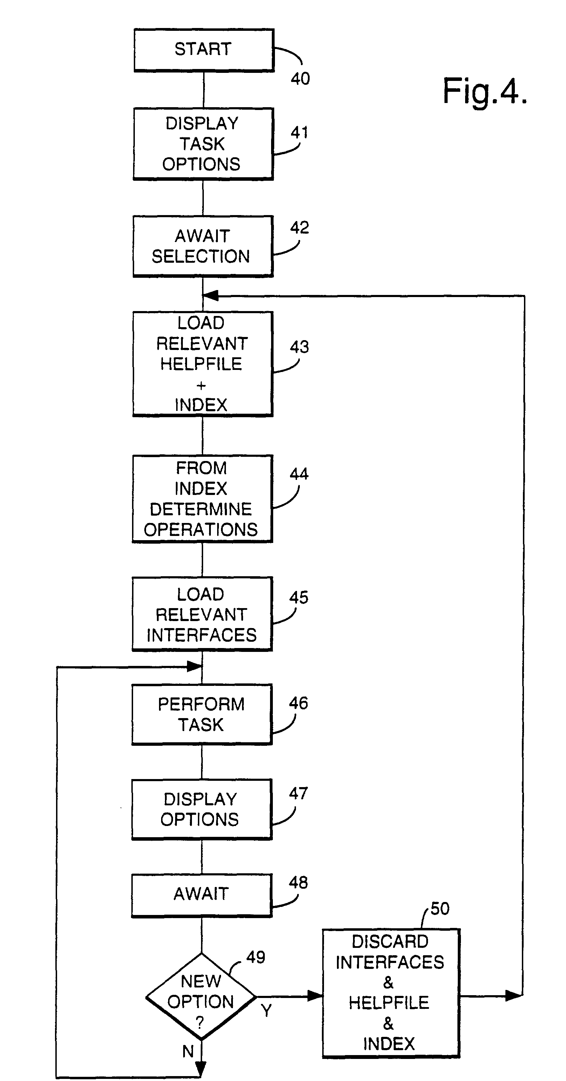

The operation of the system will now be described with reference to the flowchart shown in figure 4.

A first step in the operation of the system is the establishment of communication between all the elements of the system. This is represented by box 40 of the flowchart.

Each microcomputer 2 displays to its user the three task options A, B and C on their VDUs. This step is represented by box 41 of the flowchart.

The microcomputer 2 then awaits selection of a particular task option by a user. This step is represented by box 42.

Upon selection of a task option the microcomputer requests a copy of the helpfile and associated index from the server 3. This copy is then retained in the microcomputer's memory 21. This step is represented by box 43.

The index file is then examined to determine the required operations as represented by box 44.

The microcomputer 2 then requests copies of the required software interfaces for the determined operations as represented by box 45. These are stored in memory 21.

The software interfaces are then used to connect the microcomputer 2 to the appropriate mainframe systems 5 to 8. In effect, the microcomputer then becomes a terminal of the systems. The task is then carried out. This step is represented by box 46.

Once the task is completed the microcomputer 2 displays the task options once again as represented by box 47.

The microcomputer 2 then awaits selection of the next task option, as represented by box 48.

The next time the user selects a task, the selection is compared with the previous task to determine whether a new option has been selected. This step is represented by box 49. Should the new option be the same as the old option then the task is performed box 46 and the subsequent steps 47 and 48 carried out using the helpfile, index and software interfaces already held in memory 21.

Should the selected task option be a new option, that is, different to the one just completed then the interfaces, helpfile and index are "discarded" as represented by box 50. By "discarded" it is meant that they are cleared from memory 21 or subsequently overwritten.

The server 3 is then requested for the helpfile and index appropriate to the new task option as represented by box 43. The subsequent steps are carried out as before.

One of the advantages of the system will now be appreciated. The microcomputer 2 does not require a memory 21 with a capacity to store all the helpfiles and software interfaces necessary to perform all the possible tasks supported by the system. This is because these are loaded as required from the server 3. This enables relatively inexpensive microcomputers to be used in the system.

The selection of task option B and task option C will now be used to further illustrate use of the system 1.

At step 42 the user selects task option B by moving a cursor over a displayed icon and "clicking on" the icon. Movement of the cursor is achieved by movement of a mouse in the familiar way.

Step 43 is then carried out to load a copy of help-file 35 and index 38 from the server 3.

From the index 38 the microcomputer 2 determines that an interface to system X is required and requests a copy of the interface program 31 from the server 3. The program is executed to connect the user to the mainframe system 6.

The task is then performed step 46, the user being able to refer to the helpfile 35 for assistance in performing the task and using the system 6.

When the task is complete, the microcomputer 2 then displays the task options in preparation for the next task, steps 47, 48.

The user selects a new task option, task C. The microcomputer 2 performs the decision step 49 and, because the task is different to the previous task, clears the help-file 35, index 38 and interface 31 from its memory 21.

The microcomputer 2 loads a copy of the help-file 36 and index 39 from the server 3 into its memory 21. The index 39 is inspected and the microcomputer 2 determines that in order to perform the selected task it is necessary to perform operation Y and Z. In order to perform these operations the microcomputer must interact with mainframes 7 and 8.

The microcomputer then performs step 45 and loads from the server a copy of interface programs 32 and 33. The user then performs task C, step 46, referring where necessary to the help-file 36.

A further advantage of the system 1 is that it allows rapid and easy addition of support for further tasks or deletion of existing task without requiring significant hardware or software changes to be made.

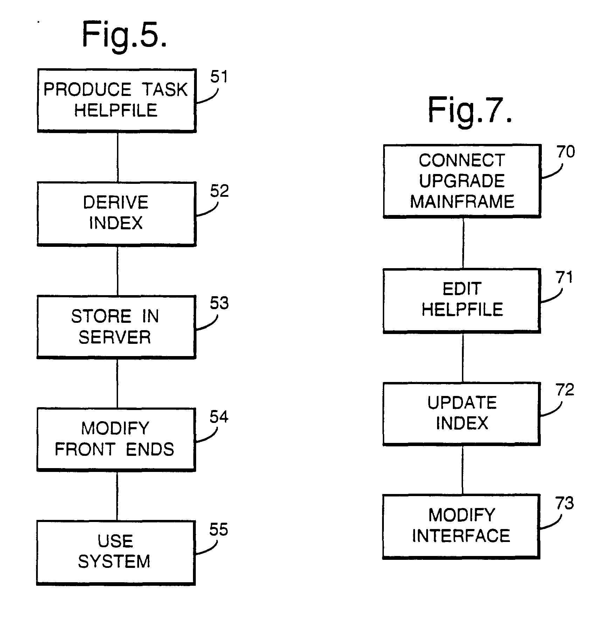

Figure 5 explains the process required to upgrade the system 1 to enable a new task to be supported from the existing mainframe systems.

A first step 51 requires the new task to be defined in the form of a help-file. This will enable a user to follow the new task and to generate an associated index as required in the next step 52.

The help-file and associated index is then stored in the memory of the server 3, step 53.

The software of the microcomputers 2 is then modified to display a new icon for the new option, step 54.

The system 1 can then be used, step 55.

An example of an upgrade to the system 1 could be the addition of a new task D which utilises operations W, X, Y and Z. In this case, a new task help-file 56 is created and an associated index 57 derived. These are added to the server memory as shown in broken outline in figure 3.

The software for displaying the options on the microcomputer 2 is then modified to include an icon for the new option, option D.

In this example, since option D utilises the existing mainframe system 5 to 8 the interface software 30 to 33 is sufficient and requires no modification or additional software.

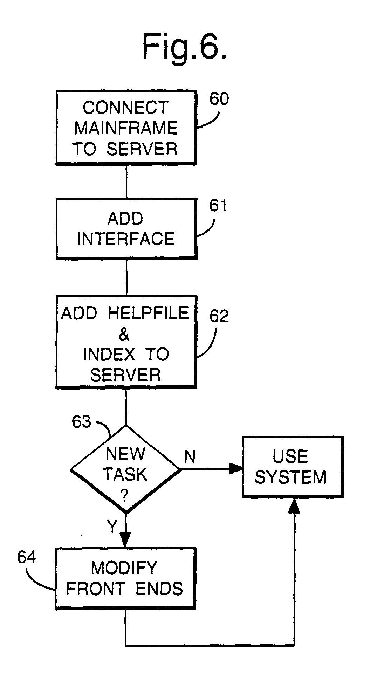

If a new task is to be added which requires the use of a new mainframe system then the operation shown in figure 6 is followed.

A first step is to connect the new mainframe to the server 3 via an extension of the cable 9, step 60.

The next step, step 61, is to add interface software to the memory of the server 3 which will support connection to the new mainframe system.

A new helpfile and associated index is produced for the new task and stored in the memory of the server 3, step 62,

The software for the microcomputers is then modified, steps 63, 64, to display a further task option.

As an example to illustrate this process, consider the addition of a new mainframe system 65 providing an operation V. The mainframe system 65 is added to the system 1 by connection to the server 3 as shown in broken outline in figure 1.

New interface software 66 is loaded into the memory of the server 3 as shown in broken outline in figure 3.

A new task F, which is to use the operation V, is defined by producing a helpfile 67 and associated index 68. These are stored in the memory of the server 3 as shown in figure 3 in broken outline.

The microcomputer software is then modified to provide an icon for the new task option F.

As an organisation develops some tasks may become superfluous and it will then be possible to upgrade by deletion of a help-file and index file from the server and deletion of an icon from the microcomputer display.

A more regular occurrence may be the replacement of one mainframe system by a more modern version. The procedure for this will now be outlined with reference to figure 7.

A first step 70 is to connect the upgraded mainframe to the server 3.

The next step 71 is to edit the help-files that utilise the existing mainframe system.

From the edited help-files, new associated indexes are generated, step 72.

It may then be necessary to modify the relevant interface software to enable interaction between the microcomputers 2 and the upgraded mainframe , step 73.

Suppose mainframe 5 is to be replaced by mainframe 74 shown in broken outline in figure 1. Essentially this performs an upgraded version of operation W supported by mainframe 5. The upgraded operation is denoted W'.

The first step is to connect the mainframe system 74 to the server 3.

The next step is to examine the existing indexes for an occurrence of existing operation W. From figure 3 it will be seen that indexes 37 and 57 include operation W.

The next step is to modify the associated help-files 34 and 56 with a word-processing package. The modification is to replace W by W'.

After this is done the indexes 37 and 57 are updated to replace W by W'.

The software interface 30 is then associated with operation W' and modified if necessary.

It should be noted here that upgrading the system has been achieved without having to upgrade the software used by the microcomputers to display the range of tasks operated by the system.

Mainframe 5 may then be removed from the system or reprogrammed to support a future operation.

Whilst in the described embodiment, the microcomputers have "local" software to support the display and selection of tasks, this software could be held in the server 3 and "loaded up" by the microcomputer when it is initially switched on by a user at the beginning of a session. The advantage of this would be that changes to this software to support the change in task available could be made centrally.

Each microcomputer 2 would then be loaded with the update front-end software by obtaining a copy of the updated version from the server 3 upon first use of the system.

## Claims

1. Apparatus (1) for enabling access by any one of a plurality of users to a plurality of mainframe computer systems (5,6,7,8), each mainframe computer system (5,6,7,8) supporting operations to complete a task (A-C) utilising at least some of the operations, the apparatus (1) comprising a set of user terminals (2) connected by at least one server to said plurality of mainframe computer systems, wherein the at least one server (3) comprises interface programs (31-33) to enable interaction to occur between each of the mainframe computer systems (5-8) and the set of user terminals (2), and a plurality of help files (34-36) each of which comprises a set of instructions for performing a task (A-C), each help file (34-36) having an associated index file (37-39) which contains descriptors of operations (W-Z) required to perform the respective task (A-C), and wherein the user terminals each comprise storage capacity for temporary storage of at least one interface program (31-33) and at least one help file with its associated index file (37-39), the system (1) responding to a task selection by a user at a user terminal (2) by downloading at least one interface program (30-33), and at least one help file (34-36) with its associated index file (37-39), to the user terminal (2), thereby enabling communication between the user terminal (2) and at least one of the mainframe computer systems (5-8) to complete the selected task.

2. Apparatus (1) according to claim 1, operable in response to a user selecting a second task (A-C), to compare the second task (A-C) to a first task (A-C) and:
(i) if the tasks (A-C) are the same, using for the second task (A-C), the files (30-39) that were downloaded for the first task (A-C); or
(ii) if tasks (A-C) are not the same then discarding said files (30-39) and downloading the files (30-39) corresponding to the second task (A-C).

3. A method for enabling access by any one of a plurality of users to a plurality of mainframe computer systems (5-8), each mainframe computer system (5-8) supporting operations to complete a task (A-C) utilising at least some of the operations (W-Z), said plurality of mainframe computer systems (5-8) being connected by at least one server (3) to a set of user terminals (2), the at least one server (3) comprising interface programs (30-33) to enable interaction to occur between each of the mainframe computer systems (5-8) and the set of user terminals (2), the method comprising the steps of:
providing a plurality of help files (34-36) each of which comprises a set of instructions for performing a task (A-C), each help file (34-36) being associated with an index file (37-39) containing descriptors of operations required to perform the respective task (A-C);
in response to a task selection by a user at a user terminal (2), downloading at least one interface program (30-33) and at least one help file (34-36) with its associated index (37-39) file to the user terminal (2), thereby enabling communication between the user terminal (2) and at least one of the mainframe computer systems (5-8) to complete the selected task (A-C).

4. A method according to claim 1, further comprising the steps of, in response to a user selecting a second task (A-C), comparing the second task (A-C) to a first task (A-C) and:
(i) if the tasks (A-C) are the same, using for the second task (A-C), the files (30-39) that were downloaded for the first task (A-C); or
(ii) if tasks (A-C) are not the same then discarding said files (30-39) and downloading the files (30-39) corresponding to the second task (A-C).

5. Apparatus (3) for enabling access by any one of a plurality of user's computers (2) to a plurality of computer systems (5-8), each computer system (5-8) supporting operations to complete a task (A-C) utilising at least some of the operations, the apparatus (3) comprising:
a plurality of interface programs (30-33) to enable interaction to occur between each of the computer systems (5-8) and the user's computer (2);
a plurality of help files (34-36) each comprising a set of instructions for performing a respective task (A-C); and
a plurality of index files (37-39) each associated with one of said help files (34-36) containing descriptors of operations required to perform the respective task (A-C),
the apparatus (3) being operable in response to the selection of a task (A-C) at a user's computer (2) to download at least one interface program (30-33) and at least one help file (34-36) with its associated index file (37-39) to the user's computer (2) to enable communication between the user's computer (2) and at least one of the computer systems (5-8) to complete the selected task (A-C).

6. A computer program or suite of computer programs comprising instructions for a computer or system of computers to perform the method as set out in claims 3 or 4.

## Patentansprüche

1. Vorrichtung (1), die einen Zugriff auf mehrere Mainframe-Computersysteme (5, 6, 7, 8) durch irgendeinen von mehreren Anwendern ermöglicht, wobei jedes Mainframe-Computersystem (5, 6, 7, 8) Operationen unterstützt, um eine Task (A-C), die wenigstens einige der Operationen verwendet, abzuschließen, wobei die Vorrichtung (1) eine Menge Anwenderterminals (2), die durch wenigstens einen Server mit den mehreren Mainframe-Computersystemen verbunden sind, umfaßt, wobei der wenigstens eine Server (3) Schnittstellenprogramme (31-33), die das Auftreten einer Wechselwirkung zwischen jedem der Mainframe-Computersysteme (5-8) und der Menge Anwenderterminals (2) ermöglichen, und mehrere Hilfedateien (34-36), wovon jede eine Menge Befehle für die Ausführung einer Task (A-C) enthält, umfaßt, wobei jede Hilfedatei (34-36) eine zugeordnete Indexdatei (37-39) besitzt, die Deskriptoren von Operationen (W-Z) enthält, die für die Ausführung der jeweiligen Task (A-C) erforderlich sind, enthält, und wobei die Anwenderterminals jeweils Speicherkapazität für die temporäre Speicherung wenigstens eines Schnittstellenprogramms (31-33) und wenigstens einer Hilfedatei mit ihrer zugeordneten Indexdatei (37-39) umfassen, wobei das System (1) auf eine Taskauswahl durch einen Anwender an einem Anwenderterminal (2) antwortet, indem es wenigstens ein Schnittstellenprogramm (30-33) und wenigstens eine Hilfedatei (34-36) mit ihrer zugeordneten Indexdatei (37-39) zum Anwenderterminal (2) herunterlädt, um dadurch eine Kommunikation zwischen dem Anwenderterminal (2) und wenigstens einem der Mainframe-Computersysteme (5-8) zu ermöglichen, um die ausgewählte Task abzuschließen.

2. Vorrichtung (1) nach Anspruch 1, die als Antwort auf einen eine zweite Task (A-C) auswählenden Anwender betreibbar ist, um die zweite Task (A-C) mit einer ersten Task (A-C) zu vergleichen, und:
(i) dann, wenn die Tasks (A-C) gleich sind, für die zweite Task (A-C) die Dateien (30-39) verwendet, die für die erste Task (A-C) heruntergeladen wurden; oder
(ii) dann, wenn die Tasks (A-C) nicht gleich sind, die Dateien (30-39) verwirft und die der zweiten Task (A-C) entsprechenden Dateien (30-39) herunterlädt.

3. Verfahren für die Ermöglichung eines Zugriffs auf mehrere Mainframe-Computersysteme (5-8) durch irgendeinen von mehreren Anwendern, wobei jedes Mainframe-Computersystem (5-8) Operationen unterstützt, um eine Task (A-C), die wenigstens einige der Operationen verwendet, abzuschließen, wobei die mehreren Mainframe-Computersysteme (5-8) durch wenigstens einen Server (3) mit einer Menge Anwenderterminals (2) verbunden sind, wobei der wenigstens eine Server (3) Schnittstellenprogramme (30-33), die das Auftreten einer Wechselwirkung zwischen jedem der Mainframe-Computersysteme (5-8) und der Menge Anwenderterminals (2) ermöglichen, umfaßt, wobei das Verfahren die folgenden Schritte umfaßt:
Vorsehen mehrerer Hilfedateien (34-36), wovon jede eine Menge Befehle enthält, um eine Task (A-C) auszuführen, wobei jeder Hilfedatei (34-36) eine Indexdatei (37-39) zugeordnet ist, die Deskriptoren für Operationen enthält, die für die Ausführung der jeweiligen Task (A-C) erforderlich sind;
als Antwort auf eine Task-Auswahl durch einen Anwender an einem Anwenderterminal (2) Herunterladen wenigstens eines Schnittstellenprogramms (30-33) und wenigstens einer Hilfedatei (34-36) mit ihrer zugeordneten Indexdatei (37-39) zum Anwenderterminal (2), um dadurch eine Kommunikation zwischen dem Anwenderterminal (2) und wenigstens einem der Mainframe-Computersysteme (5-8) zu ermöglichen, um die ausgewählte Task (A-C) abzuschließen.

4. Verfahren nach Anspruch 1, das ferner die folgenden Schritte umfaßt: als Antwort auf die Auswahl einer zweiten Task (A-C) durch einen Anwender Vergleichen der zweiten Task (A-C) mit einer ersten Task (A-C) und:
(i) falls die Tasks (A-C) gleich sind, Verwenden der Dateien (30-39), die für die erste Task (A-C) heruntergeladen wurden, für die zweite Task (A-C); oder
(ii) falls die Tasks (A-C) nicht gleich sind, Verwerfen der Dateien (30-39) und Herunterladen der der zweiten Task (A-C) entsprechenden Dateien (30-39).

5. Vorrichtung (3), die einen Zugriff auf mehrere Computersysteme (5-8) durch irgendeinen von mehreren Anwender-Computern (2) ermöglicht, wobei jedes Computersystem (5-8) Operationen unterstützt, um eine Task (A-C), die wenigstens einige der Operationen verwendet, abzuschließen, wobei die Vorrichtung (3) umfaßt:
mehrere Schnittstellenprogramme (30-33), die das Auftreten einer Wechselwirkung zwischen jedem der Computersysteme (5-8) und dem Anwender-Computer (2) ermöglichen;
mehrere Hilfedateien (34-36), wovon jede eine Menge Befehle für die Ausführung einer entsprechenden Task (A-C) umfaßt; und
mehrere Indexdateien (37-39), wovon jede einer der Hilfedateien (34-36) zugeordnet ist und Deskriptoren für Operationen enthält, die für die Ausführung der entsprechenden Tasks (A-C) erforderlich sind,
wobei die Vorrichtung (3) als Antwort auf die Auswahl einer Task (A-C) an einem Anwender-Computer (2) betreibbar ist, um wenigstens ein Schnittstellenprogramm (30-33) und wenigstens eine Hilfedatei (34-36) mit ihrer zugeordneten Indexdatei (37-39) an den Anwender-Computer (2) herunterzuladen, um eine Kommunikation zwischen dem Anwender-Computer (2) und wenigstens einem der Computersysteme (5-8) zu ermöglichen, um die ausgewählte Task (A-C) abzuschließen.

6. Computerprogramm oder Suite von Computerprogrammen, die Befehle für einen Computer oder ein System aus Computern umfassen, um das Verfahren nach Anspruch 3 oder 4 auszuführen.

## Revendications

1. Équipement (1) pour permettre l'accès, par l'un quelconque d'une pluralité d'utilisateurs, à une pluralité de systèmes à calculateur centraux (5, 6, 7, 8), chaque système à calculateur central (5, 6, 7, 8) pouvant effectuer des opérations pour exécuter une tâche (A-C) utilisant au moins certaines des opérations, l'équipement (1) comprenant un ensemble de terminaux d'utilisateur (2) connectés par au moins un serveur à ladite pluralité de systèmes à calculateur centraux, dans lequel l'au moins un serveur (3) comprend des programmes d'interface (31-33) pour permettre une interaction entre chacun des systèmes à calculateur centraux (5-8) et l'ensemble de terminaux d'utilisateur (2), et une pluralité de fichiers d'aide (34-36), chacun comprenant un jeu d'instructions pour exécuter une tâche (A-C), chaque fichier d'aide (34-36) ayant un fichier pointeur associé (37-39) qui contient des descripteurs d'opérations (W-Z) nécessaires pour exécuter la tâche respective, et où les terminaux d'utilisateur ont chacun de la capacité de stockage pour stocker temporairement au moins un programme d'interface (31-33) et au moins un fichier d'aide avec son fichier pointeur associé (37-39), le système répondant à une sélection de tâche, par un terminal d'utilisateur (2), en déchargeant au moins un programme d'interface (30-33), et au moins un fichier d'aide (34-36) avec son fichier pointeur associé (37-39), dans le terminal d'utilisateur (2), permettant ainsi une communication entre le terminal d'utilisateur (2) et au moins l'un des systèmes à calculateur centraux (5-8) pour exécuter la tâche sélectionnée.

2. Équipement selon la revendication 1, agencé pour, en réponse à la sélection par un utilisateur d'une seconde tâche (A-C), comparer la seconde tâche (A-C) à une première tâche (A-C) et :
(i) si les tâches (A-C) sont les mêmes, utiliser, pour la seconde tâche (A-C), les fichiers (30-39) qui ont été déchargés pour la première tâche (A-C), ou
(ii) si les tâches (A-C) sont différentes, alors éliminer les dits fichiers (30-39) et décharger les fichiers (30-39) correspondant à la seconde tâche (A-C).

3. Procédé pour permettre l'accès, par l'un quelconque d'une pluralité d'utilisateurs, à une pluralité de systèmes à calculateur centraux (5-8), chaque système à calculateur central (5-8) pouvant effectuer des opérations pour exécuter une tâche (A-C) utilisant au moins certaines des opérations (W-Z), ladite pluralité de systèmes à calculateur centraux (5-8) étant connectée, par au moins un serveur (3), à un ensemble de terminaux d'utilisateur (2), l'au moins un serveur (3) comprenant des programmes d'interface (30-33) pour permettre une interaction entre chacun des systèmes à calculateur centraux (5-8) et l'ensemble de terminaux d'utilisateur (2), le procédé comprenant les étapes suivantes :
- fourniture d'une pluralité de fichiers d'aide (34-36), chacun comprenant un jeu d'instructions pour effectuer une tâche (A-C), chaque fichier d'aide (34-36) étant associé à un fichier de pointeur (37-39) qui contient des descripteurs d'opérations nécessaires pour exécuter la tâche respective (A-C),
- en réponse à une sélection de tâche, par un utilisateur d'un terminal d'utilisateur (2), en décharger au moins un programme d'interface (30-33), et au moins un fichier d'aide (34-36) avec son fichier pointeur associé (37-39), dans le terminal d'utilisateur (2), permettant ainsi une communication entre le terminal d'utilisateur (2) et au moins l'un des systèmes à calculateur centraux (5-8) pour exécuter la tâche sélectionnée (A-C).

4. Procédé selon la revendication 3, comprenant les étapes de, en réponse à la sélection par un utilisateur d'une seconde tâche (A-C), comparer la seconde tâche (A-C) à une première tâche (A-C) et :
(i) si les tâches (A-C) sont les mêmes, utiliser, pour la seconde tâche (A-C), les fichiers (30-39) qui ont été déchargés pour la première tâche (A-C), ou
(ii) si les tâches (A-C) sont différentes, alors éliminer les dits fichiers (30-39) et décharger les fichiers (30-39) correspondant à la seconde tâche (A-C).

5. Équipement (3) pour permettre l'accès, par l'un quelconque d'une pluralité de calculateurs d'utilisateur (2), à une pluralité de systèmes à calculateur (5-8), chaque système à calculateur (5-8) pouvant effectuer des opérations pour exécuter une tâche (A-C) utilisant au moins certaines des opérations, l'équipement (3) comprenant :
- une pluralité de programmes d'interface (30-33) pour permettre une interaction entre chacun des systèmes à calculateur (5-8) et le calculateur d'utilisateur (2),
- une pluralité de fichiers d'aide (34-36), chacun comprenant un jeu d'instructions pour exécuter une tâche respective (A-C), et
- une pluralité de fichiers de pointeurs (37-39), chacun associé à l'un des fichiers d'aide (34-36) et contenant des descripteurs d'opérations nécessaires pour exécuter la tâche respective (A-C),
l'équipement (3) étant agencé pour, en réponse à la sélection d'une tâche (A-C) par un calculateur d'utilisateur (2), décharger au moins un programme d'interface (30-33) et au moins un fichier d'aide (34-36) avec son fichier de pointeur associé (37-39) dans le calculateur d'utilisateur (2), pour permettre une communication entre le calculateur d'utilisateur (2) et au moins l'un des systèmes à calculateur (5-8) pour exécuter la tâche sélectionnée (A-C).

6. Programme de calculateur ou suite de programmes de calculateur comprenant des instructions pour un calculateur ou un système de calculateurs pour exécuter le procédé de l'une des revendications 3 et 4.
